# EUROPÄISCHE PATENTSCHRIFT

(11) **EP 0 384 964 B1**
(45) Veröffentlichungstag und Bekanntmachung des Hinweises auf die Patenterteilung: **06.07.1994**
(21) Anmeldenummer: 89120766.4
(22) Anmeldetag: 09.11.1989
(51) Int. Cl.: C21D 9/32, C21D 1/10, H05B 6/40

(54) **Verfahren und Vorrichtung zum induktiven Härten der gewellten Oberfläche eines Werkstücks**
Process and apparatus for induction hardening of the corrugated surfaces of a workpiece
Procédé et dispositif pour le durcissement par induction des surfaces ondulées d'une pièce

(30) Priorität: 02.03.1989 US 318347
(43) Veröffentlichungstag der Anmeldung: 05.09.1990
(73) Patentinhaber: TOCCO, INC., Boaz Alabama 35957 (US)
(72) Erfinder: Pfaffmann, George D., Farmington, MI 48024 (US); Balzer, Norbert R., Troy, MI 48083 (US); Mucha, George M., Parma Hts., OH 44130 (US); Novorsky, Donald E., Pleasant Ridge, MI 48069 (US)
(74) Vertreter: Hennicke, Albrecht, Dipl.-Ing.

(56) Entgegenhaltungen:
- DE-A- 1 533 955
- GB-A- 714 490
- US-A- 2 338 496
- US-A- 4 675 488
- US-A- 4 757 170
- PATENT ABSTRACTS OF JAPAN, Band 8, Nr. 110 (C-224)[1547], 23 Mai 1984; & JP-A-59 23821 (Koushiyuuha Netsuren K.K.) 07-02-1984

## Beschreibung

Die Erfindung betrifft ein Verfahren und eine Vorrichtung zum induktiven Härten der gewellten Oberfläche eines Werkstückes, insbesondere der Verzahnung eines Zahn- oder Kettenrades, das in Richtung einer sich quer zur Wellung erstreckenden Achse eine gewisse Breite hat und dessen gewellte Fläche Spitzen oder Scheitel und verbindende Wurzeln oder Täler aufweist, wobei die Oberfläche durch Induktion längs eines ersten, in Richtung der Achse wandernden Bandes fortschreitend zunächst soweit vorgewärmt wird, daß die Wurzeln auf eine Temperatur erwärmt werden, die unterhalb der Abschreckhärtungstemperatur liegt; wobei anschließend die vorerwärmte Oberfläche durch Induktion längs eines zweiten, in Achsialrichtung wandernden Bandes fortschreitend soweit enderwärmt wird, daß die vorgewärmte Oberfläche Abschreckhärtungstemperatur erreicht und wonach die enderwärmte Oberfläche unmittelbar nach ihrer Enderwärmung fortschreitend abgeschreckt wird.

Es ist wünschenswert, die gezahnte Oberfläche eines Werkstücks zu härten, um zu erreichen, daß diese den Verschleiß- und Berührungskräften widersteht, die im Betrieb von einem eine hohe Leistung übertragenden Zahnradgetriebe auf die Verzahnung ausgeübt wird. Zu den zu härtenden Flächen, die den durch den Eingriff anderer Zahnräder ausgeübten Belastungen widerstehen müssen, gehören die Verbindungsflächen zwischen den einzelnen Zähnen des Zahnrades ebenso wie die Zahnflanken und Zahnspitzen der Zähne selbst. Der Körper des Zahnrades unter der gehärteten Oberfläche sollte verhältnismäßig weich bleiben, um die Festigkeit und das Formänderungsvermögen des Werkstückes im übrigen zu erhalten. Ideal wäre es, wenn das Werkstück ein Härtebild hätte, das sich in einer gleichförmigen und flachen Tiefe über die gesamte gehärtete Oberfläche erstreckt, um die gewünschte Oberflächenabriebfestigkeit zu erreichen, die mit der Härtung einhergeht, während gleichzeitig die Festigkeit des darunterliegenden Materials erhalten bleibt und hierdurch die Sprödigkeit am Körper des Werkstückes unterhalb der Zahnflächen vermieden wird, die mit der Härtung einhergeht.

Ältere Verfahren, die ein induktives Erwärmen zum Härten der Zähne eines Zahnrades verwenden, haben nur begrenzt damit Erfolg gehabt, das gewünschte Härtebild zu erreichen, welches sich bis zu einer geringen Tiefe gleichförmig über die Zahnflächen erstreckt. Das zu härtende Material muß über eine Umwandlungstemperatur hinaus erwärmt und dann durch Abschrecken mit einer Flüssigkeit rasch gekühlt werden, um die Härtung herbeizuführen. Faktoren, welche das sich ergebende Härtebild beeinflussen, sind die Tiefe, bis zu der das Material erwärmt wird, die Höhe der Temperatur, bis zu welcher die Aufwärmtemperatur die Umwandlungstemperatur übersteigt, und die Abkühlungsgeschwindigkeit. Eine kreisförmige Induktorspule, die einen geringen Abstand von der welligen Oberfläche der Verzahnung hat, erzeugt im allgemeinen in den radial am meisten außen liegenden Bereichen der Verzahnung eine größere Induktionserwärmung als in den Übergangsbereichen zwischen den Zähnen mit dem Ergebnis, daß die Temperatur und die Tiefe der Erwärmung in den äußeren Bereichen der Zähne größer ist. Die unterschiedlich erwärmten Zonen werden dann beim Flüssigkeitsabschreckprozeß mit unterschiedlichen Geschwindigkeiten abgekühlt mit dem Ergebnis, daß das hierdurch entwickelte Härtebild über die Zähne des Zahnrades ungleichmäßig ist, wobei eine übermäßige Härtung unterhalb der Zahnspitzen und eine ungenügende Härtung im Bereich der Verbindungsflächen zwischen den Zähnen vorhanden ist. Um die Zähne eines Zahnrades durch induktive Erwärmung erfolgreich zu härten, ist es deshalb notwendig, das Werkstück unmittelbar vor dem Abschreckhärten bis zu einer kontrollierten Tiefe gleichmäßig auf eine vorher ausgewählte Temperatur zu erwärmen.

Ein Verfahren zum Erzeugen eines Härtungsmusters bis zu einer gleichförmigen Tiefe über die Oberfläche von Zahnradzähnen ist im US-Patent Nr. 4 675 488 offenbart. Bei diesem Verfahren ist ein Zahnrad in einer dieses eng umgebenden Induktionsspule angeordnet, die eine Höhe oder eine axiale Länge hat, die der Länge des Zahnrades in dessen Achsrichtung entspricht. Die Induktorspule wird dann kurzzeitig mit einem Wechselstrom beaufschlagt, der eine Frequenz von weniger als ungefähr 50 KHz hat, um das Zahnrad vorzuwärmen. Die Aufwärmtiefe beim induktiven Erwärmen ist umgekehrt proportional der Stromfrequenz in der Induktorspule, wobei eine Vorwärmung mit verhältnismäßig niedriger Frequenz bis zum Fußkreis oder zu den Wurzeln der Zähne in das Zahnrad eindringt, um ein ringförmiges Band im Bereich des Zahnkranzes zu erwärmen, welches unterhalb der Zahnradzähne um das Zahnrad herumläuft. Dieses innere Band wird auf eine erhöhte Temperatur erwärmt, die unterhalb der Abschreckhärtungs-Umwandlungstemperatur des Metalles liegt, aus dem das Zahnrad besteht. Dem Vorwärmschritt folgt eine kurze Pause, damit die Wärmeenergie in den Zähnen verschwinden kann und hierdurch sich eine hohe Temperatur und ein hoher Energiepegel in dem Band konzentriert, welches den Zahnwurzeln benachbart ist. Nach der Pause folgt vorzugsweise ein zweiter Vorwärmschritt mit niedriger Frequenz, um das unter den Zähnen befindliche Materialband weiter zu erwärmen und auch die Zahnflanken des Zahnrades vorzuwärmen und auf eine erhöhte Temperatur zu bringen. Auf diese Weise sammeln und konzentrieren die Vorwärmschritte mit verhältnismäßig niedriger Frequenz eine hohe Energie und eine hohe Temperatur in dem sich in Umfangsrichtung durch alle Wurzelbereiche der Zahnradzähne erstreckenden inneren Materialband. Dieses innere Band befindet sich dann auf einer höheren Temperatur als die Zähne selbst und hat eine Temperatur, die wesentlich größer ist als die Temperatur des darunterliegenden Zahnradkernes. Dieses Vorwärmtemperaturprofil ist sehr dynamisch und instabil, so daß das vorgewärmte Zahnrad dann sofort in eine zweite, dieses umgebende Induktorspule überführt wird, die sofort für kurze Zeit mit einem Strom von hoher Frequenz beaufschlagt wird, die größer ist als etwa 100 KHz. Der zugeführte Hochfrequenzstrom erhöht die Zahnradtemperatur über die Abschreckhärtungs-Umwandlungstemperatur hinaus nur bis zu einer geringen Tiefe unterhalb der Zahnoberflächen. Diese über die Abschreckhärtungs-Umwandlungstemperatur hinausgehende Erwärmung bis zu einer geringen Tiefe verteilt sich gleichmäßig über die Zahnflanken und die diese verbindenden Wurzelbereiche, da das erhitzte innere Band in den die Wurzeln verbindenden Bereichen Vorwärmenergie bereitstellt, welche die verbindenden Wurzelbereiche befähigt, zusammen mit den Zahnflanken und den Zahnspitzen, die einen geringeren Abstand von der Induktorspule haben, die erhöhte Endtemperatur zu erreichen, und die ferner eine anderweitige rasche Wärmeableitung von den Zahnoberflächen in die Zähne und in den Kern des Zahnrades verhindert. Das Endtemperaturprofil ist ebenfalls höchst instabil und dynamisch und es folgt deshalb sofort eine Flüssigkeitsabschreckung der erhitzten Oberflächen, um das bis zu einer geringen Tiefe auf einer hohen Temperatur befindliche Material unter die Umwandlungstemperatur abzukühlen, wobei sich ein gleichförmiges Härtemuster bis zu der entsprechenden geringen Tiefe auf der gesamten Oberfläche der Zahnradzähne bildet.

Dank der geringeren Temperaturen vor dem Abschreckhärten werden die Zahnradzähne nach dem oben beschriebenen Verfahren erfolgreich gleichförmig auf ihren nach außen gerichteten Oberflächen gehärtet, ohne daß hierbei aufgrund einer übermäßigen Erwärmungstiefe Sprödigkeit auftritt und ohne daß weiche, nicht gehärtete Oberflächen zwischen den Zahnradzähnen zurückbleiben. Dieses bekannte Verfahren ermöglicht jedoch nicht in idealer Weise ein Härten von Zahnradzähnen durch induktive Erwärmung und leidet an verschiedenen Nachteilen.

Die Zahnräder werden zunächst axial in eine diese umgebende Induktionserwärmungsspule eingeführt, welche während zweier Vorwärmzyklen eine Niederfrequenzerwärmung durchführt. Dann wird das Zahnrad axial in eine zweite Induktionserwärmungsspule geschoben, wo es mit einem höheren Niederfrequenzstrom enderwärmt wird. Die beiden in axialem Abstand voneinander angeordneten Induktionsspulen müssen jede eine Lange in Axialrichtung haben, welche die axiale Länge des Zahnrades übersteigt, damit das gesamte Zahnrad sowohl beim Vorwärmen als auch beim Enderwärmen auf einmal aufgewärmt wird. Da die Temperaturprofile, die bei der Durchführung dieses Verfahrens erreicht werden, höchst instabil und dynamisch sind, mußte die Erwärmung sehr schnell vor sich gehen. Die Anforderungen an die axiale Länge und die hohe Aufwärmgeschwindigkeit der Induktorspule erfordern eine hohe Stromdichte über den gesamten zu erwärmenden langgestreckten Bereich, die wiederum eine bemerkenswert hohe Nennleistung für die Stromversorgung einer jeden Induktorspule erfordert. Es ist wohlbekannt, daß, je mehr die Nennleistung einer Stromversorgung anwächst, insbesondere für einen Schwingungserzeuger, wie er für Niederfrequenzströme oberhalb 100 KHz benötigt wird, desto höher die Kosten für die Stromversorgung drastisch ansteigen. Aus diesem Grunde ist die induktive Erwärmung von Zahnradzähnen nach dem oben beschriebenen, patentierten Verfahren verhältnismäßig teuer und manchmal auch unpraktisch, wenn die zu härtenden Zahnräder entweder im Durchmesser oder in ihrer axialen Länge oder Höhe sehr groß sind.

Ein anderes, früher patentiertes Verfahren überwindet viele dieser Nachteile, die mit dem oben beschriebenen Verfahren verbunden sind, sein Wirkungsgrad ist jedoch auch noch nicht ideal. Bei diesem Verfahren, das in dem US-Patent 4 757 170 beschrieben ist, wird das Zahnrad fortschreitend durch zwei axial miteinander fluchtende Induktorspulen hindurchbewegt, um die Zahnoberflächen des Zahnrades in Axialrichtung fortschreitend zunächst vorzuwärmen und dann auf die Endwärme zu bringen, im Gegensatz zu dem oben beschriebenen Verfahren, bei dem das Zahnrad auf seiner gesamten Länge in zwei Spulen unterschiedlich und separat erwärmt wird. Das fortschreitende Abtasten des Zahnrades in seiner axialen Längsrichtung ermöglicht es, daß die Induktorspulen in Axialrichtung kleiner gehalten werden können, weil zu jeder Zeit die zum Aufbringen des gewünschten Temperaturprofils erforderliche hohe Stromdichte nur längs eines schmalen Bandes benötigt wird, welches das Zahnrad umgibt und der Breite der Induktorspule entspricht, an der sich das Zahnrad in Axialrichtung vorbeibewegt. Da die Erwärmung auf der Zahnradoberfläche progressiv und gleichzeitig vor sich geht, ergibt sich die hohe Stromdichte aus der kleineren Breite der Aufwärmbänder sowohl für die Vorerwärmung als auch für die Enderwärmung und erfordert keine bedeutend hohe Nennleistung, wie sie erforderlich ist, um das Zahnrad auf seiner ganzen Länge zunehmend vorzuwärmen und auf die Endtemperatur zu bringen. Infolgedessen überwindet die zuletzt beschriebene Methode die Kostennachteile und die Nachteile im Wirkungsgrad und in der beschränkten Werkstücklänge, die mit dem früher beschriebenen Verfahren verbunden waren.

Es gibt jedoch auch noch einige Nachteile, die bei der Durchführung des zuletzt beschriebenen Verfahrens auftreten. Die Vorrichtung, die erforderlich ist, um das Werkstück kontrolliert durch zwei separate Spulen hindurchzuführen, ist kompliziert und teuer. Außerdem erfordert die gleichzeitige Bewegung des Zahnrades durch zwei Spulen notwendigerweise die gleiche Geschwindigkeit bei der Axialabtastung, beim Vorerwärmen und beim Enderwärmen. Veränderungen in den Heizparametern, die bei diesen zwei verschiedenen Aufwärmprozessen verwendet werden, sind nur sehr begrenzt möglich. Außerdem besteht ein Nachteil bei der Durchführung der beiden zuvor erwähnten Verfahren zum Induktionserwärmen und Härten von Zahnradzähnen darin, daß Innenzahnräder von Planetengetrieben, die oft an einem Ende geschlossen sind, nicht zwischen separaten, koaxial angeordneten Induktorspulen hindurchgeschoben oder an diesen vorbeigeführt werden können und daß auch keine Außenzahnräder mit nach außen vorspringenden Flanschen, Schultern o.dgl. bearbeitet werden können.. Die oben beschriebenen, patentierten Verfahren sind deshalb in ihren Anwendungsmöglichkeiten auf Zahnräder beschränkt, die eine Außenverzahnung und im wesentlichen keine radialen Vorsprünge haben.

Es ist auch bereits eine Vorrichtung zum Härten der gewellten Oberfläche von Werkstücken bekannt (GB-A-714 490), bei der Induktionsheizvorrichtungen in die Wellentäler des Werkstückes eingreifen und in Axialrichtung des Werkstückes in diesen entlanggeführt werden, wobei den Induktions-Heizvorrichtungen Abschreckvorrichtungen unmittelbar folgen, die eine Flüssigkeit in die erhitzten Wellentäler spritzen und hierdurch eine Abschreckhärtung erzielen. Diese bekannte Vorrichtung wandert nur einmal durch die Wellentäler des Werkstückes und erhitzt dieses in seinem Wellenbereich auch nur einmal. Hierbei kann zwar eine gleichmäßige Erwärmung der Wellentäler erreicht werden, die bekannte Vorrichtung ist jedoch nur zum Härten solcher Werkstücke sinnvoll verwendbar, die wenige Wellentäler haben, wie dies beispielsweise bei Kettensternen der Fall ist. Außerdem können nur solche Werkstücke bearbeitet werden, deren Querschnitt sich in Axialrichtung nicht ändert, wo also die Wellentäler keine Vorsprünge oder Endflächen haben, an welchen die Induktions-Heizvorrichtungen anstoßen können.

Aufgabe der Erfindung ist es, ein Verfahren anzugeben und eine Vorrichtung zur Oberflächenhärtung zu schaffen, mit der auch solche Werkstücke bearbeitet werden können, die an einem ihrer Enden Vorsprünge aufweisen, welche einen vollständigen Vorbeilauf des Werkstückes an der Induktions-Heizvorrichtung verhindern.

Diese Aufgabe wird mit einem Verfahren nach der Erfindung der eingangs näher erläuterten Art dadurch gelöst, daß die induktive Vorwärmung und die induktive Enderwärmung durch axiale Relativbewegung zwischen dem Werkstück und nur einem Induktor durchgeführt wird, der zum Vorwärmen mit einem Wechselstrom geringer Frequenz < 50 KHz und zum Enderwärmen mit einem Wechselstrom hoher Frequenz > 100 KHz beaufschlagt wird.

Die Lösung der Aufgabe wird nach der Erfindung mit einer Vorrichtung zum induktiven Härten der gewellten Oberfläche eines Werkstückes, insbesondere der Verzahnung eines Zahn- oder Kettenrades erreicht, das in Axialrichtung eine gewisse Breite hat und eine Mittelachse aufweist und dessen radial vorspringenden Zähne Zahnoberflächen und die Zähne verbindende Zahnwurzeln aufweisen und wobei folgende Konstruktionsmerkmale vorgesehen sind:
a) Nur eine einzige Induktions-Heizvorrichtung, die sich im Abstand von der Zahnoberfläche befindet und die koaxial zu dieser ausgerichtet ist, um die Zahnoberfläche zu erwärmen;
b) eine erste Stromquelle, um die Induktions-Heizvorrichtung zur Vorwärmung mit einem ersten Wechselstrom zu versorgen, der eine Frequenz von weniger als etwa 50 KHz hat;
c) eine zweite Stromquelle, welche die Induktions-Heizvorrichtung zur Enderwärmung mit einem zweiten Wechselstrom versorgt, dessen Frequenz höher ist als etwa 100 KHz;
d) Vorschubmittel, mit denen die Zahnfläche an der Induktions-Heizvorrichtung vorbeigeführt werden kann, um die Zahnoberfläche fortschreitend vorzuwärmen und dann die vorgewärmte Zahnoberfläche endgültig zu erwärmen und
e) Vorrichtungen zum sofortigen Abschrecken der enderwärmten Zahnoberfläche, wodurch die Zahnoberfläche gehärtet wird.

Das Verfahren und die Vorrichtung zum induktiven Erwärmen und Abschreckhärten einer wellenförmigen Kreisringfläche, wie sie beispielsweise die Zahnfläche eines Zahnrades darstellt, erfordern keine hohe Nennstromleistung und erzeugen bis zu einer geringen Tiefe unterhalb der gehärteten Oberfläche für Werkstücke mit verschiedenen Umfangsflächen, beispielsweise von Innenringzahnrädern oder Stirnrädern mit radial vorspringenden Flanschen oder Schultern, ein gleichförmiges Härtebild.

Besonders zweckmäßig ist es, wenn das Abschreckhärten längs eines dritten, axial wandernden Bandes durchgeführt wird, welches dem zweiten, in Axialrichtung wandernden Band unmittelbar folgt. Hierdurch kann die auf die Endtemperatur gebrachte Oberfläche unmittelbar nach deren Enderwärmung fortschreitend abgeschreckt werden.

Um ein möglichst günstiges Härtebild zu erhalten, können bei der fortschreitenden Vorerwärmung Werkstück und Induktorspule mit einer ersten, vorherbestimmten Geschwindigkeit aneinander vorbei bewegt werden, während bei fortschreitender Enderwärmung Werkstück und Induktorspule mit einer zweiten, vorherbestimmten Geschwindigkeit aneinander vorbei bewegt werden, die sich von der ersten, vorherbestimmten Geschwindigkeit bei der Vorerwärmung unterscheidet.

Bei Werkstücken, die eine Endfläche aufweisen, ist es möglich, das Werkstück zur Vorerwärmung in einer ersten Axialrichtung von einer Ausgangsstellung in eine Endstellung am Induktor vorbeizuführen und die Enderwärmung dadurch zu erreichen, daß das Werkstück aus seiner Endstellung in der entgegengesetzten Axialrichtung am Induktor vorbeigeführt wird.

Zur Bearbeitung hohlzylindrischer Werkstücke, die ein offenes Ende und eine radial nach innen gerichtete Verzahnung haben, kann ein Induktor mit nach außen gerichteter, zylindrischer Induktorfläche vom offenen Ende des Werkstückes her an dessen Innenverzahnung vorbeigeführt werden. Hierbei ist es auch möglich, das Werkstück beim Vorwärmen und beim Enderwärmen zu drehen.

Zum Bearbeiten eines im wesentlichen zylindrischen Werkstückes, dessen gewellte Oberfläche mit den Spitzen oder Scheiteln der Wellen einen radial äußersten Kreis bildet, ist es sinnvoll, einen Induktor für induktive Erwärmung mit einer ringförmigen Oberfläche zu verwenden, die im wesentlichen der radial äußersten Oberfläche des Werkstückes angepaßt ist und der zunächst mit einem ersten Wechselstrom beaufschlagt wird, der eine Frequenz von weniger als etwa 50 KHz hat, wenn das Werkstück mit einem äußeren Umfang an der Ringfläche des Induktors axial vorbeibewegt wird. Beim zweiten Durchgang wird der Induktor dann mit einem zweiten Wechselstrom beaufschlagt, dessen Frequenz größer als etwa 100 KHz ist. Hierdurch wird das vorerwärmte Werkstück nur im Bereich der welligen Flächen auf eine Abschreckhärtungstemperatur erhitzt und unmittelbar anschließend an die Enderwärmung durch fortschreitendes Abschrecken der Wellenflächen gehärtet. Das Vorwärmen und Enderhitzen kann hierbei in der gleichen axialen Richtung durchgeführt werden, wenn das Werkstück unmittelbar nach dem Vorwärmen in seine Ausgangsstellung zurückbewegt wird, aus der es dann zum Enderwärmen wieder vorgeschoben wird.

Im Anschluß an das fortschreitende Abschreckhärten kann das Werkstück überflutet und insgesamt einer Abschreckung unterworfen werden.

Die Erfindung hat den Vorteil, daß eine hohe Nennstromleistung nicht erforderlich ist, da durch Verwendung eines Abtastverfahrens zur induktiven Erwärmung nur ein schmales Band erforderlich ist, dessen Breite der Höhe der Induktorspulenfläche in Axialrichtung entspricht, im Gegensatz zu einer zunehmenden Erwärmung, bei der die Zahnoberfläche auf ihrer gesamten Axiallänge einmal induktiv erwärmt wird. Hierdurch eignet sich das erfindungsgemäße Verfahren auch für unterschiedlich geformte Zahnräder, die ein geschlossenes Ende oder radial vorspringende Schultern, Flanschen o.dgl. aufweisen.

In vorteilhafter Weise kann das Vorwärmen auch dadurch ausgeführt werden, daß das Werkstück, insbesondere ein Zahnrad, in einer axialen Richtung an der Induktorspule vorbeibewegt wird, während die Enderwärmung dann dadurch ausgeführt wird, daß das Zahnrad in entgegengesetzter Richtung axial an der Spule vorbeibewegt wird, ohne daß ein Schaltschritt dazwischen liegt. Hierbei wird das Werkstück vorzugsweise in vertikaler Richtung bewegt, wobei die Enderwärmung bei der Abwärtsbewegung des Werkstückes erfolgt, bei der das Enderwärmungsband relativ zum Werkstück aufwärts wandert und die Flüssigkeit zum Abschreckhärten unterhalb des Enderwärmungsbandes aufgebracht wird.

Bei der Durchführung des Vorwärmprozesses kann es zweckmäßig sein, einen Wechselstrom zu verwenden, der eine Frequenz von weniger als 50 KHz und vorzugsweise weniger als etwa 10 KHz hat, während die Enderwärmung mit einem Wechselstrom durchgeführt werden kann, dessen Frequenz größer ist als etwa 100 KHz und vorzugsweise größer als etwa 200 KHz. Mit diesen Frequenzen kann in vorteilhafter Weise ein Endtemperaturprofil geschaffen werden, das sich in geringer Dicke zur Vorbereitung der Abschreckhärtung gleichförmig über die Zahnoberfläche verteilt.

Besonders zweckmäßig ist es, eine statische Abschreckung des gesamten Werkstückes im Anschluß an die Abschreckhärtung vorzunehmen, um sowohl die gehärteten als auch die nicht gehärteten Teile des Werkstückes zu kühlen.

Die Vorrichtung nach der Erfindung kann in wirtschaftlicher und wirksamer Weise nur eine einzige Induktionsspule aufweisen, deren Induktionsfläche sich in geringem Abstand von der Zahnoberfläche befindet und koaxial zu dieser ausgerichtet ist. Ferner kann eine Schaltvorrichtung vorgesehen werden, welche die erste Stromquelle und die zweite Stromquelle abwechselnd einschaltet, während die Zahnoberfläche in Axialrichtung gegenüber der Induktionsfläche hin- und herbewegt wird. Ferner können Steuervorrichtungen vorgesehen sein, welche die Schaltvorrichtung mit der Vorschubvorrichtung koordinieren, um die Induktorspule entweder mit der ersten Stromquelle oder der zweiten Stromquelle zu verbinden, während Axialbewegungen zwischen Induktorspule und Werkstück ausgeführt werden. Die Steuervorrichtung kann auch dazu dienen, die erste und die zweite Stromversorgung ein- und auszuschalten, um eine Stromversorgung der Induktionsspule bei einzelnen Axialbewegungen des Werkstückes zu verhindern, beispielsweise beim Zurückführen des Werkstückes nach dem Vorwärmen, bevor das Werkstück zur Enderwärmung wieder an der Induktorspule vorbeigeführt wird.

Die Vorschubvorrichtung kann zweckmäßig auch so ausgebildet sein, daß sie aufeinanderfolgende Axialbewegungen mit verschiedenen Geschwindigkeiten ausführen und das Werkstück in axial entgegengesetzten Richtungen bewegen kann. Hierbei kann das Werkstück auch so gesteuert werden, daß zwischen aufeinanderfolgenden Axialbewegungen eine Pause eintritt.

Die Induktionsfläche der Induktorspule kann radial nach außen oder radial nach innen gerichtet sein, um beispielsweise die Innenverzahnung eines Ringzahnrades oder die Außenverzahnung eines Stirnzahnrades härten zu können.

Die Erfindung ist insbesondere anwendbar zum induktiven Erwärmen und Abschreckhärten der zylindrischen, verzahnten Oberfläche eines in Axialrichtung langgestreckten Zahnrades, d.h. eines Zahnrades, das eine gewisse Breite hat, und die Erfindung wird unter besonderer Bezugnahme hierauf beschrieben. Die Erfindung hat jedoch ein breiteres Anwendungsgebiet und kann auch zum induktiven Erwärmen und Abschreckhärten anderer langgestreckter Werkstücke, wie Zahnstangen od.dgl., oder für Werkstücke mit einer zylindrischen Oberfläche verwendet werden, die im wesentlichen konzentrisch zu einer Mittelachse verläuft und im Querschnitt eine gewellte Umrißlinie, beispielsweise die Umrißlinie eines Zahnrades, aufweist. Die Erfindung ist auch mit besonderem Vorteil zum Induktionserwärmen und Abschreckhärten der Innenfläche eines Planetenringzahnrades mit Innenverzahnung anwendbar, insbesondere bei einem Planetenringzahnrad mit Innenverzahnung, das an einem Ende geschlossen ist und deshalb nicht unmittelbar zwischen mehreren, axial in einer Flucht angeordneten Induktorspulen vorbeigeführt werden kann.

Weitere Merkmale und Vorteile der Erfindung ergeben sich aus der nachfolgenden Beschreibung und den Zeichnungen, in denen eine bevorzugte Ausführungsform an einem Beispiel näher erläutert wird. Es zeigt:
- Fig. 1: eine bildliche Darstellung der bevorzugten Ausführungsform der Erfindung im Schrägbild,
- Fig. 2: den Gegenstand der Fig. 1 in einer Draufsicht,
- Fig. 3: den Gegenstand der Fig. 1 in einer Vorderansicht und teilweise im Schnitt in Richtung der Pfeile 3-3 gesehen,
- Fig. 4: eine Draufsicht auf den Gegenstand der Fig. 3,
- Fig. 5: einen vertikalen Teilschnitt nach Linie 5-5 der Fig. 4 in vergrößertem Maßstab,
- Fig. 6: einen Teilschnitt der Fig. 4 nach Linie 6-6 in vergrößertem Maßstab,
- Fig. 7: eine Vorderansicht und einen vertikalen Schnitt nach Linie 7-7 der Fig. 2,
- Fig. 8A: eine Seitenansicht und einen Vertikalschnitt des Gegenstandes der Fig. 7 nach Linie 8A-8A,
- Fig. 8B: eine der Fig. 8A entsprechenden Seitenansicht und einen Schnitt, bei denen sich die in Fig. 8A dargestellte Vorrichtung in einer anderen Arbeitsstellung befindet,
- Fig. 9A: einen horizontalen Teilschnitt nach Linie 9A-9A des Gegenstandes der Fig. 8A,
- Fig. 9B: einen horizontalen Teilschnitt nach Linie 9B-9B des Gegenstandes der Fig. 8B,
- Fig. 10: einen vertikalen Teilschnitt nach Linie 10-10 der Fig. 8A,
- Fig. 11: einen vergrößerten Teilschnitt durch das am Induktorring entlanggeführte Werkstück, der schematisch das fortschreitende Vorwärmen, Enderhitzen und Abschreckhärten entsprechend dem Verfahren nach der Erfindung zeigt,
- Fig. 12 bis 15: Teilschnitte durch ein Werkstück, die annähernd die aufeinanderfolgenden Stadien der Vorwärmung und Enderhitzung in Übereinstimmung mit der vorliegenden Erfindung zeigen, und
- Fig. 16: einen Teilquerschnitt durch ein Werkstück, welcher das endgültige Härtebild eines mit der Erfindung bearbeiteten Werkstücks zeigt.

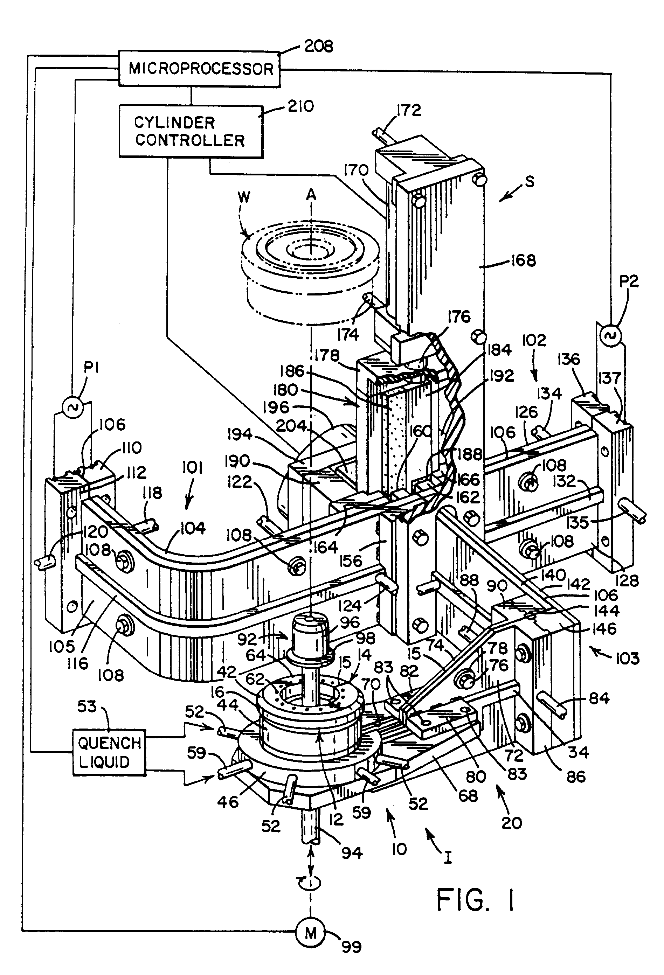

In Fig. 1 ist eine Vorrichtung zum fortschreitenden induktiven Erwärmen und Abschreckhärten der inneren, zylindrischen, gezahnten Zahnradoberfläche eines Werkstückes W dargestellt. Die Vorrichtung besteht im wesentlichen aus einer ersten Stromquelle P1, einer zweiten Stromquelle P2, einer Induktorvorrichtung I und einer Schaltvorrichtung S, mit der die Induktorvorrichtung I abwechselnd entweder mit der ersten Stromquelle P1 oder mit der zweiten Stromquelle P2 verbunden werden kann.

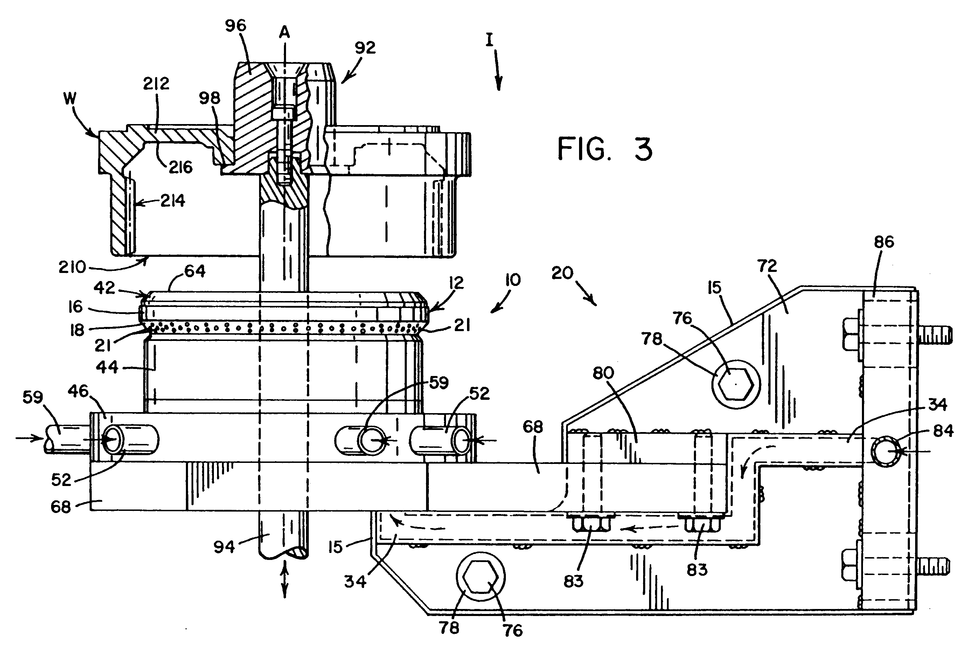

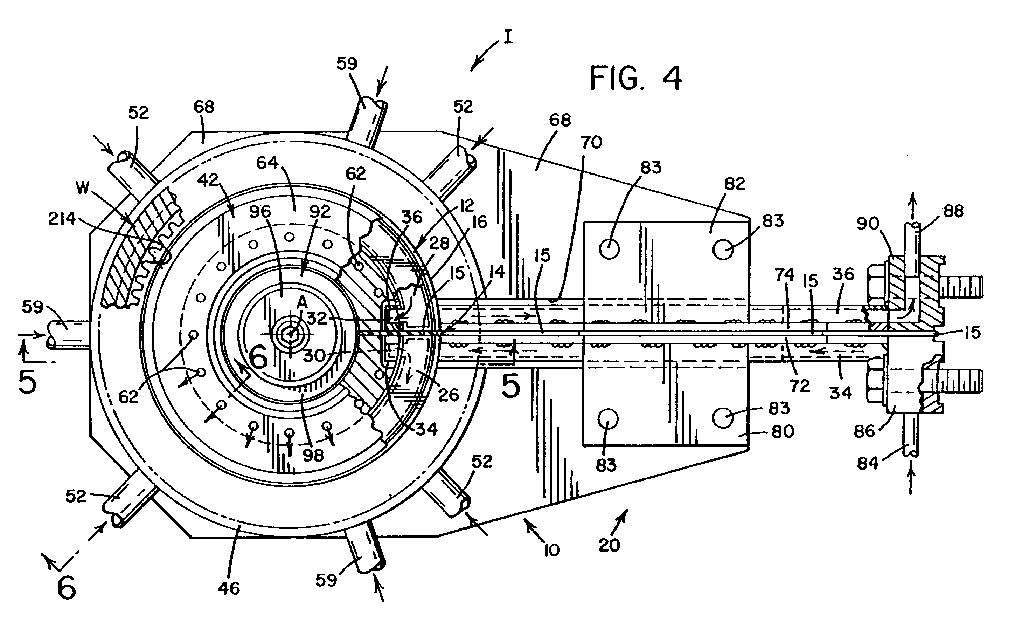

Wie insbesondere aus den Fig. 3 bis 6 hervorgeht, weist die Induktorvorrichtung I einen Spulenträger 10 und eine Induktorzuleitungseinrichtung 20 auf. Der Spulenträger 10 trägt eine Induktionsspule 12 mit einer einzelnen Windung, die im wesentlichen einen Ring um eine Achse A bildet, wobei zwischen den in Umfangsrichtung einander gegenüberliegenden Enden der Ringspule ein Spalt 14 vorhanden ist. Die Induktionsspule 12 hat eine nach außen gerichtete, zylindrische Oberfläche 16 und eine nach abwärts gerichtete konische Fläche 18, die nach außen gerichtete Löcher 21 für den Austritt von Abschreckflüssigkeit aufweist. Ein inneres Teil 22 begrenzt eine Abschreckflüssigkeitsleitung 24, die sich in Umfangsrichtung rund um die ringförmige Induktorspule 12 erstreckt. Eine ringförmige Kappe 26 begrenzt ferner eine Kühlmittelleitung 28, die sich ebenfalls in Umfangsrichtung rund um die Induktionsspule 12 erstreckt. Die Kühlmittelleitung 28 hat Kühlmitteleinlaß- und Kühlmittelauslaßöffnungen 30 bzw. 32, die mit den Kühlmitteleinlaß- und -auslaßleitungen 34 bzw. 36 in Verbindung stehen. Die Abschreckflüssigkeitsleitung 24 hat vier Abschreckflüssigkeitseinlaßöffnungen 38, von denen jede mit einer Abschreckflüssigkeitseinlaßleitung 40 in Verbindung steht.

Der Spulenträger 10 weist ferner einen oberen Spulenträgerblock 42, einen ringförmigen Block 44, einen unteren Spulenträgerblock 46 und eine Mittelbuchse 48 auf, welche die einzelnen Blockteile mit Maschinenschrauben 50 zusammenklemmt. Die Abschreckflüssigkeitseinlaßleitungen 40 laufen durch die Blockteile des Spulenträgers 10 hindurch und verbinden die Abschreckflüssigkeitseinlaßöffnungen 38 mit den Abschreckflüssigkeitszuleitungen 52, die ihrerseits mit einer nur schematisch dargestellten Abschreckflüssigkeitsquelle 53 verbunden sind.

Wo dies erforderlich ist, sind in den Abschreckflüssigkeitsleitungen 40 O-Ringdichtungen 54 und 56 vorgesehen.

Ferner durchziehen die Blockteile des Spulenträgers 10 noch drei Durchflußkanäle 58 für ein statisch wirkendes Abschreckmittel, welche Kanäle die Abschreckmittelzuführleitungen 59 mit einem Ringkanal 60 verbinden. Dieser Ringkanal 60 wird durch Abschreckmittelleitungen 61 mit Abschreckmittelöffnungen 62 an der oberen Stirnfläche 64 des oberen Spulenträgerblockes 42 verbunden. Der untere Spulenträgerblock 46 ist mit Schrauben 66 an einer elektrisch nicht-leitenden Grundplatte 68 befestigt, die einen mit dem Spalt 14 in der Induktorspule 12 fluchtenden Schlitz 70 aufweist und sich in Richtung auf die Induktorzuleitungsvorrichtung 20 erstreckt.

Die Induktorzuleitungsvorrichtung 20, die im folgenden kurz "Induktor-Bus" genannt wird, hat zwei zu dem Induktor führende Leitungsschienen 72 und 74, die durch Verbindungsschrauben 76 nebeneinandergehalten werden. Ein dünnes Blatt oder eine dünne Folie 15 aus Isoliermaterial ist in dem Spalt 14 der Induktionsspule 12 angeordnet und erstreckt sich durchgehend oder in Abschnitten von dem Spalt 14 durch den Schlitz 70 in der Grundplatte 68 in Richtung auf die Induktorleitungsschienen 20 und weiter zwischen diesen Induktorleitungsschienen 72 und 74. Die Verbindungsschrauben 76 sind in gleicher Weise mit Hilfe von nicht-leitenden Beilagscheiben 78 elektrisch isoliert. Die Induktorleitungsschienen 72 und 74 sind mit Befestigungsplatten 80 und 82 versehen, um die Basisplatte 68 des Spulenträgers 10 an dem Induktor-Bus 20 mit Befestigungsschrauben 83 zu befestigen. Die Kühlmitteleinlaßleitung 34 läuft von einer Kühlmittelzuleitungsöffnung 84 an einem "Fischschwanz" 86 an der Induktorzuleitungsschiene 72 entlang zu der Kühlmitteleinlaßöffnung 30 in der Induktorspule 12. Ebenso läuft auch die Kühlmittelauslaßleitung 36 von der Kühlmittelauslaßöffnung 32 in der Induktorspule 12 zu einer Kühlmittelauslaßöffnung 88 in dem benachbarten "Fischschwanz" 90 an der Induktorleitungsschiene 74 entlang. Das Kühlmitteleinlaßrohr 34 und das Kühlmittelauslaßrohr 36 werden von flachen Kupferrohren gebildet, die an den flachen Außenseiten der elektrischen Induktorzuleitungsschienen 72 und 74 hart angelötet sind.

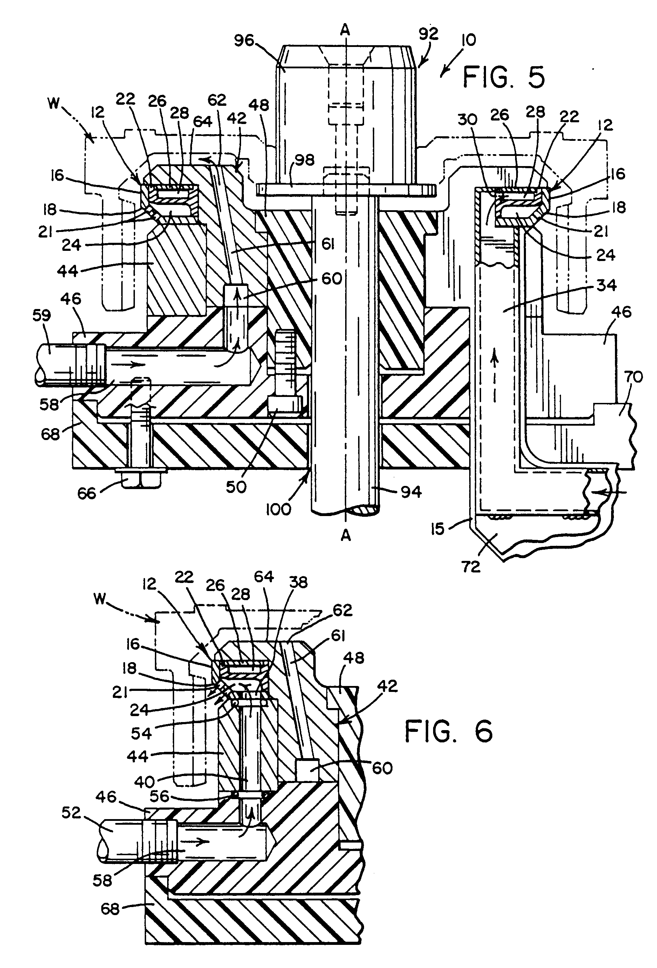

Dem Spulenträger 10 und dem Induktor-Bus 20 ist ein Werkstückträger 92 zugeordnet, der das Werkstück W gegenüber der Induktorspule 12 bewegt. Der Werkstückträger 92 besteht aus einer vertikalen Tragachse 94, die koaxial zur Spule 12 angeordnet ist und auf der ein Aufspanndorn 96 befestigt ist, der einen Kragen 98 aufweist und geeignet ist, das Werkstück W zu tragen, wie dies im einzelnen in den Fig. 3 und 5 dargestellt ist. Durch die Grundplatte 68, den unteren Spulenträgerblock 46 und die zentrale Buchse 48 des Spulenträgers 10 erstreckt sich ein vertikaler Durchlaß 100, den die vertikal angeordnete Tragachse 94 durchdringt. Ein Motor 99 kann die Tragachse 94 in dem Durchlaß drehen und in vertikaler Richtung auf- und abbewegen, wie dies mehr im einzelnen weiter unten durch die Wirkungsweise der Vorrichtung näher erläutert werden wird.

Zusätzlich zu der Induktorvorrichtung I hat die Vorrichtung zum induktiven Erwärmen und Abschreckhärten der Innenverzahnung des Werkstückes W nach der Erfindung eine erste Stromquelle P1, die mit Hilfe einer ersten elektrischen Leitungsschieneneinrichtung 101 an die Schaltvorrichtung S angeschlossen ist, eine zweite Stromquelle P2, die mit Hilfe einer zweiten elektrischen Leitungsschienenvorrichtung 102 an die Schaltvorrichtung S angeschlossen ist, und eine dritte elektrische Leitungsschienenvorrichtung 103, welche die Schaltvorrichtung S mit der Induktorvorrichtung I verbindet.

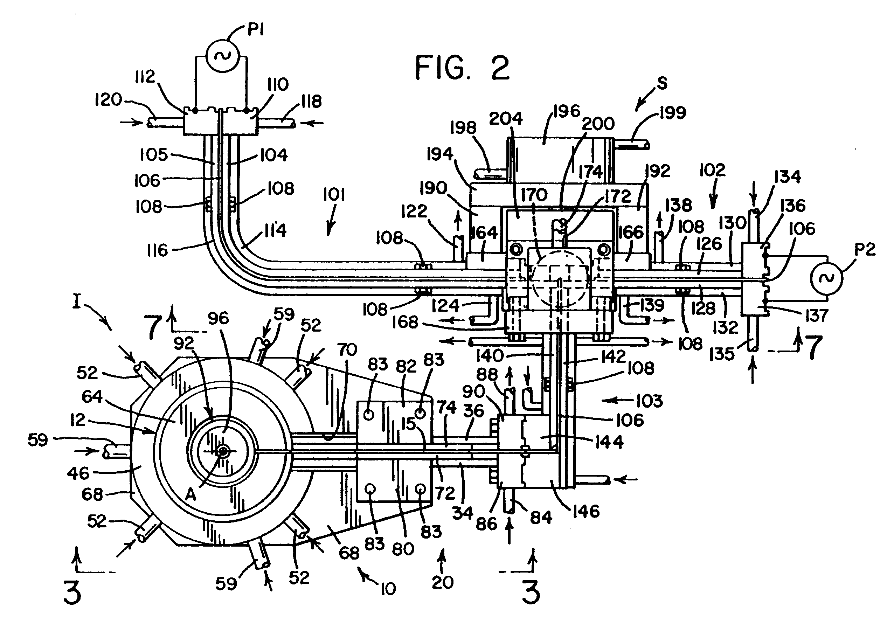

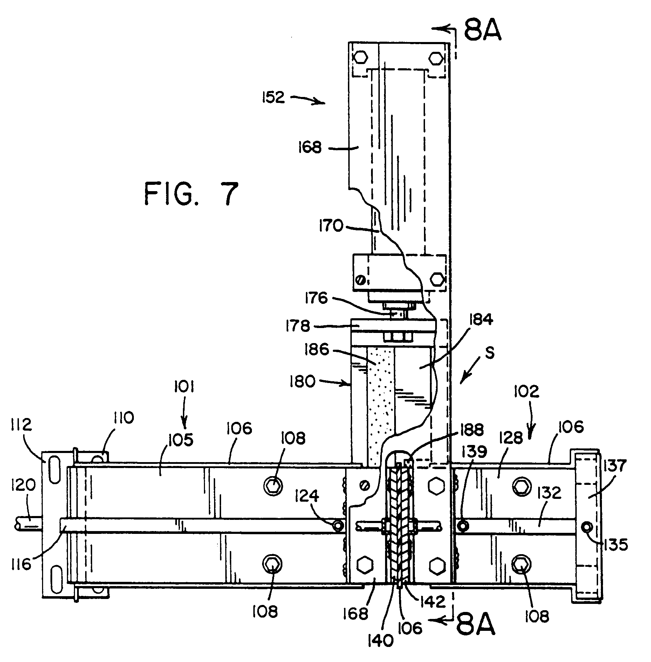

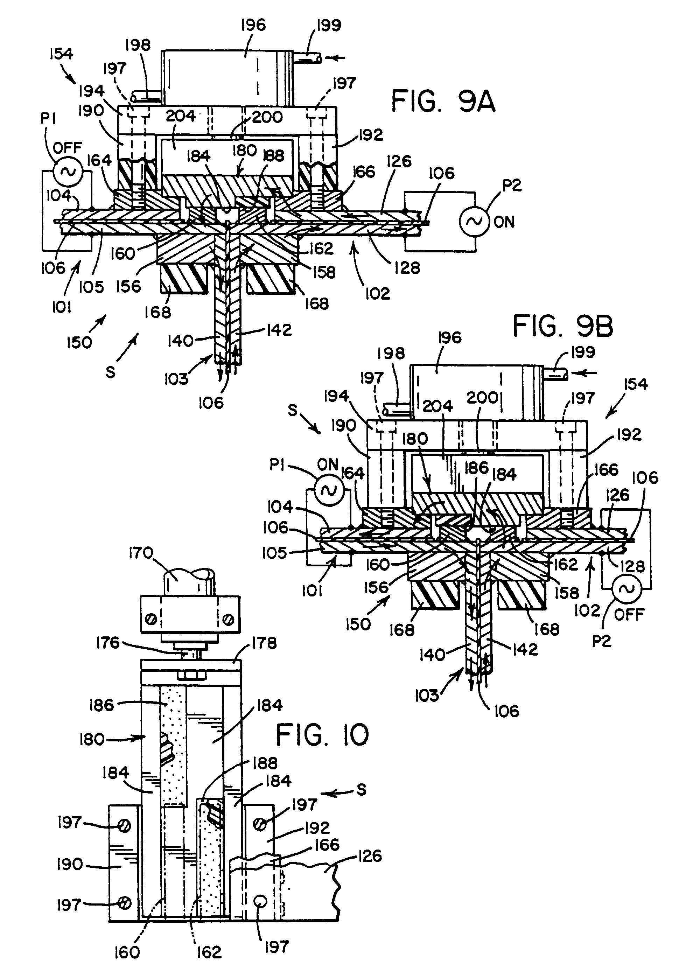

Wie aus den Fig. 2 und 7 hervorgeht, hat die erste Leitungsschienenvorrichtung 101 zwei nebeneinander angeordnete Leitungsschienen 104 und 105, die durch einen dünnen Streifen Isoliermaterial 106 getrennt sind und durch Schrauben 108 nebeneinandergehalten werden. Die Leitungsschienen 104 und 105 erstrecken sich von den Blockenden 110 und 112 zu Klemmen im Inneren der Schaltvorrichtung S, die in den Fig. 9A und 9B dargestellt sind. Die Kühlmittelrohre 114 und 116 laufen an den Leitungsschienen 104 bzw. 105 von Kühlmitteleinlaßöffnungen 118 bzw. 120 an dem jeweils zugeordneten Blockende entlang zu den Kühlmittelauslaßöffnungen 122 bzw. 124 neben der Schaltvorrichtung S. Die erste Stromquelle P1 ist über die Blockenden 110 und 112 an die Leitungsschienen 104 und 105 angeschlossen und kann einen Wechselstrom mit einer Frequenz von weniger als etwa 50 KHz bei einem Spannungspegel von größer als etwa 100 kW bereitstellen.

Die zweite elektrische Leitungsschienenvorrichtung 102 hat in ähnlicher Weise zwei elektrische Leitungsschienen 126 und 128, die auf beiden Seiten eines Isoliermaterialstreifens 106 durch Schrauben 108 nebeneinander in Stellung gehalten werden. Kühlmittelleitungen 130 und 132 laufen von Kühlmitteleinlaßöffnungen 134 und 135 in den zugeordneten Blockenden 136 und 137 zu Kühlmittelauslaßöffnungen 138 und 139, die neben der Schaltvorrichtung S angeordnet sind. Die zweite Stromquelle P2 ist über das zweite Blockendenpaar 136 und 137 an das zweite Leitungsschienenpaar 126 und 128 angeschlossen und kann einen Wechselstrom mit einer Frequenz > 100 KHz und mit einem Leistungspegel größer als etwa 100 kW bereitstellen.

Die dritte elektrische Leitungsschienenvorrichtung 103 besteht aus einem dritten Paar elektrischer Leitungsschienen 140 und 142, die ebenso durch Schrauben 108 auf beiden Seiten eines dünnen Streifens 106 aus Isoliermaterial nebeneinander in Stellung gehalten werden und in ähnlicher Weise in Längsrichtung sich erstreckende Kühlmittelrohre tragen, die die Leitungsschienen kühlen. Die dritten Leitungsschienen 140 und 142 laufen von den Klemmenenden in der Schaltvorrichtung S zu Blockenden 144 und 146, die an "Fischschwanz"-Klemmen 86 und 90 der Leitungsschienen 72 und 74 der Induktorleitungsschienenanordnung angeschlossen sind.

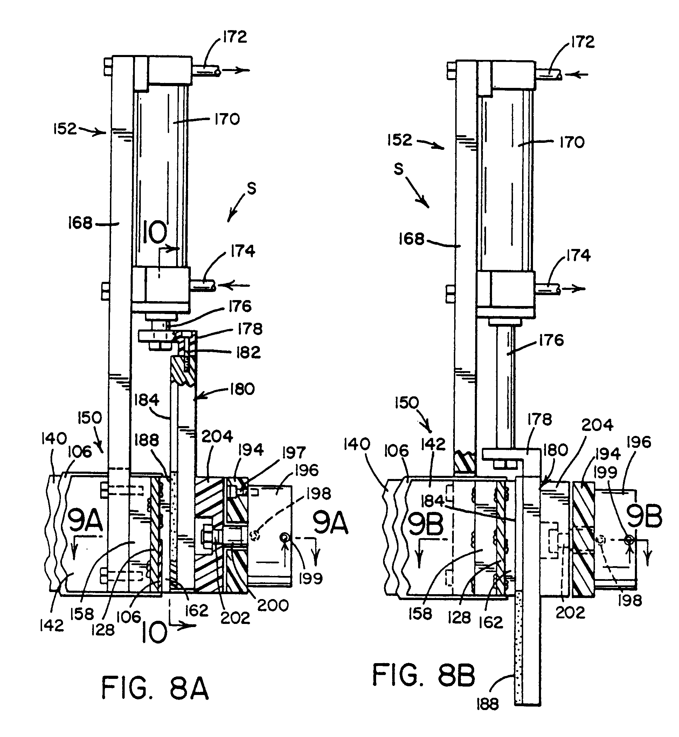

In den Fig. 8A und 8B ist die Schaltvorrichtung S dargestellt, die einen vertikalen Zylindertragrahmen 152 aufweist, der aus einer aufrechtstehenden Tragsäule 168 besteht, auf der ein hydraulischer Zylinder 170 in vertikaler Lage angeordnet ist, der Anschlußnippel 172 und 174 zum Abführen und Zuführen einer hydraulischen Flüssigkeit und eine vertikale Kolbenstange 176 aufweist. Die Kolbenstange 176 trägt eine elektrisch nichtleitende Konsole 178, an der mit einer Maschinenschraube 182 eine Kontaktschiene 180 befestigt ist. Die Kontaktschiene 180 ist in Fig. 10 gezeigt und hat eine elektrisch leitende Fläche 184, eine verhältnismäßig schmale erste Isolierfläche 186 und eine verhältnismäßig schmale zweite Isolierfläche 182, die in vertikaler und horizontaler Richtung gegenüber der ersten Isolierfläche 186 versetzt ist. Die Kontaktschiene 180 ist mit der Kolbenstange 176 in vertikaler Richtung zwischen der in Fig. 8A gezeigten angehobenen Stellung und einer in Fig. 8B gezeigten abgesenkten Stellung verschiebbar.

Wenn sich die Kontaktschiene in ihrer in vertikaler Richtung angehobenen Stellung befindet, hat die zweite Isolierfläche 188 der Kontaktschiene 180 Flächenkontakt mit der zweiten Bürste 162, während sich die elektrisch leitende Fläche 184 in Flächenkontakt mit der ersten Bürste 160, dem dritten Leitungsschienenanschluß 164 und dem vierten Leitungsschienenanschluß 166 befindet, wie dies in Fig. 9A dargestellt ist. Wenn sich die Kontaktschiene dagegen in der vertikal abgesenkten Stellung befindet, liegt die erste Isolierfläche 186 der Kontaktschiene 180 an der ersten Bürste 160 an und die elektrisch leitende Fläche 184 befindet sich in Berührungskontakt mit der zweiten Bürste 162, dem dritten Leitungsschienenanschluß 164 und dem vierten Leitungsschienenanschluß 166, wie dies in Fig. 9B dargestellt ist.

Die Schaltvorrichtung S hat ferner einen horizontal angeordneten Zylinderrahmen 154, der elektrisch nicht-leitende Seitenholme 190 und 192 und eine Rahmentraverse 194 aufweist, an der ein Hydraulikzylinder 196 mit Schrauben 197 in horizontaler Lage befestigt ist. Der horizontale Hydraulikzylinder 196 hat Anschlußnippel 198 und 199 für Hydraulikleitungen und eine horizontal angeordnete Kolbenstange 200, an der mit einem Bolzen 202 ein Druckblock 204 befestigt ist, der in horizontaler Richtung gegen die vertikal verschiebliche Kontaktschiene 180 gedrückt werden kann, um diese in festen Berührungskontakt mit den verschiedenen Teilen der Kontaktvorrichtung 150 zu drücken, wie dies weiter oben unter Bezugnahme auf die Fig. 9A und 9B näher beschrieben wurde.

Ein Mikroprozessor 208 steuert den Motor 99, der das Werkstück in vertikaler Richtung auf- und abschiebt und um die Achse A dreht. Der Mikroprozessor steuert außerdem die von der Flüssigkeitsquelle 53 zugeführte Abschreckflüssigkeit und eine Zylindersteuervorrichtung 210, die den vertikalen Hydraulikzylinder 170 und den horizontalen Hydraulikzylinder 196 steuert.

Die Wirkungsweise der Vorrichtung und der Ablauf des Verfahrens sind folgende:
Die weiter oben beschriebene Vorrichtung nach der Erfindung ist besonders geeignet zum induktiven Erwärmen und Abschreckhärten der nach innen gerichteten Zahnoberfläche eines zylindrischen Innenzahnrades eines Planetengetriebes, welches Zahnrad ein offenes und ein im wesentlichen geschlossenes Ende hat. Die Wirkungsweise der Vorrichtung wird in Übereinstimmung mit dieser bevorzugten Ausführungsform der Erfindung und unter Bezugnahme auf ein solches Werkstück im folgenden näher beschrieben.

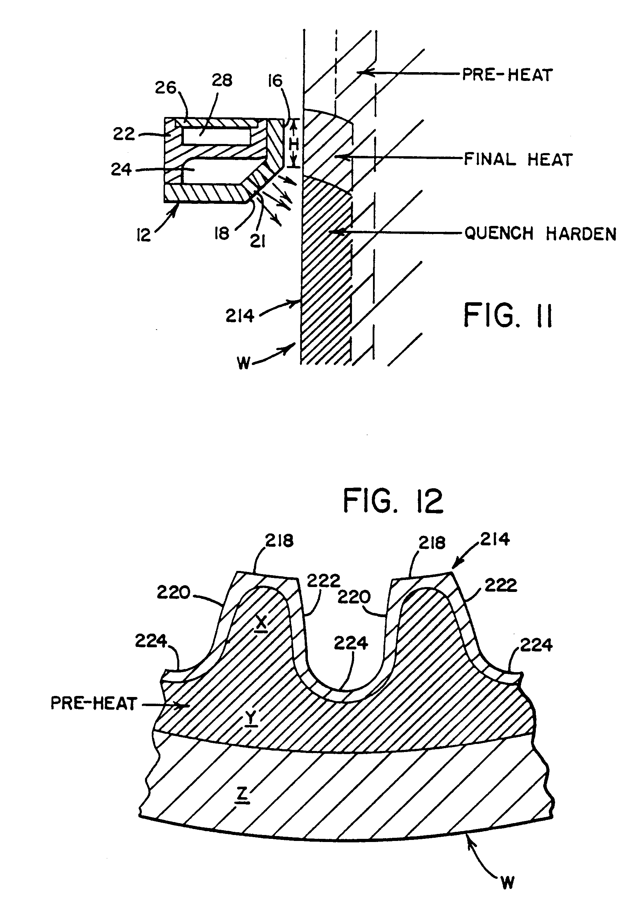

Das Werkstück W hat ein offenes Ende 210 und ein im wesentlichen geschlossenes Ende 212, eine innere Zylinderfläche mit erhabenen Zahnradzähnen 214 und einer inneren Stirnfläche 216 (Fig. 3). Wie in den Fig. 12 bis 15 gezeigt ist, haben die Zahnradzähne Zahnspitzen 218 und einander gegenüberliegende Tragflächen 220 und 222 und sind durch verbindende Wurzelflächen 224 miteinander verbunden. Innere Bereiche des Werkstückes W sind der Zahndickenbereich X, der Wurzelbereich Y und der darunterliegende Körper oder Kranzbereich Z des Zahnrades.

Die Ausübung des Verfahrens und die Wirkung der Vorrichtung beginnen damit, daß zunächst das Werkstück W auf den Dorn 96 aufgesteckt wird, wie dies in Fig. 3 gezeigt ist. Dann wird die Vorwärmung des Werkstücks W durchgeführt, wobei sich die Kontaktschiene 180 in ihrer in Vertikalrichtung abgesenkten und in Fig. 8B gezeigten Lage befindet, in die sie von dem Mikroprozessor 208 durch die Zylindersteuervorrichtung 210 gesteuert wird. Danach wird die erste Stromquelle P1 von dem Mikroprozessor 208 angesteuert, um einen Wechselstrom zwischen der ersten Leitungsschienenvorrichtung 101 und der dritten Leitungsschienenvorrichtung 103 durch die Schaltvorrichtung S fließen zu lassen, wie dies durch die Pfeile in Fig. 9B angedeutet ist. Dieser erste Wechselstrom hat einen Leistungspegel, der größer ist als ungefähr 100 kW, und eine Frequenz von weniger als etwa 50 KHz, vorzugsweise weniger als 10 KHz. Der Motor 99 wird dann veranlaßt, das Werkstück W aus der in Fig. 3 dargestellten angehobenen Stellung an der Induktorspule 12 vorbei fortschreitend in die in Fig. 5 in strichierten Linien dargestellte abgesenkte Stellung zu bewegen. Die fortschreitende Bewegung des Werkstückes W an der Induktionsspule 12 vorbei veranlaßt die innere zylindrische Fläche 214, längs eines sich in Axialrichtung bewegenden Bandes, dessen Breite der Höhe H der nach außen gerichteten Zylinderfläche 16 der Spule 12 entspricht, sich auf eine Temperatur vorzuwärmen, die unterhalb der Abschreckhärtungstemperatur liegt. Dies ist schematisch in Fig. 11 dargestellt.

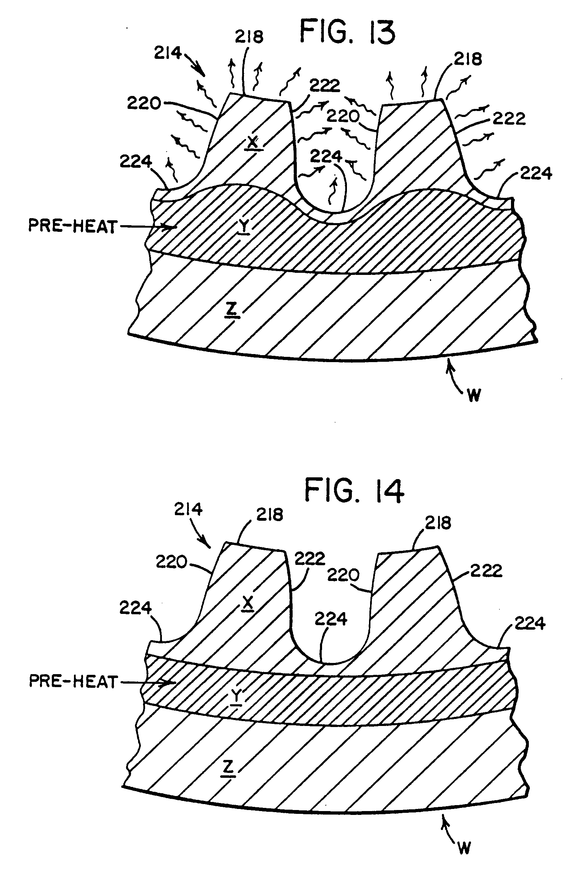

In eigentümlicher Weise läßt das Vorwärmen mit verhältnismäßig niedriger Frequenz, die von der ersten Stromquelle P1 bereitgestellt wird, die Wärme durch den Zahndickenbereich X und den Wurzelbereich Y in das Werkstück W eindringen, wie dies in Fig. 12 gezeigt ist. Das Zahnrad bleibt jedoch in dem darunterliegenden Körper- oder Kranzbereich Z im wesentlichen unerwärmt. Das anfängliche, in Fig. 12 dargestellte Vorwärmprofil ist dynamisch und wechselt schnell durch Entweichen von Wärmeenergie aus den Oberflächen der Zahnradzähne, das in Fig. 13 gezeigt ist, in das in Fig. 14 gezeigte Vorwärmprofil. Durch diesen Vorwärmschritt wird ein kontinuierliches Vorwärmband erzeugt, das unter den Zahndickenbereichen X liegt und die Wurzelbereiche Y miteinander verbindet.

Unmittelbar nach der Vorwärmung, die ein inneres, ringförmiges erwärmtes Band unter der Wirkung der ersten Stromquelle P1 schafft, wird die Vorrichtung schnell auf Enderwärmung der Zahnoberflächen unter der Wirkung der zweiten Stromquelle P2 umgeschaltet. Die erste Stromquelle P1 wird abgeschaltet und das Werkstück W schnell aufwärts zurück in eine Stellung gefahren, in der das offene Ende 210 neben der Induktorspule 12 liegt. Durch Zurückziehen der horizontalen Kolbenstange 200 mit Hilfe des horizontalen Zylinders 196 wird der auf die Kontaktschiene 180 von dem Druckbblock 204 ausgeübte Druck vermindert, so daß der vertikale Zylinder 170 die vertikale Kolbenstange 176 und die Kontaktschiene 180 aufwärts in die in Fig. 8A gezeigte angehobene Stellung verschieben kann. Die horizontale Kolbenstange 200 wird dann von dem horizontalen Zylinder 196 ausgefahren und drückt den Druckblock 204 gegen die Kontaktschiene 180, wodurch diese fest gegen die zugeordneten Teile der Kontaktvorrichtung 150 gepreßt wird, um einen Lichtbogen zwischen diesen Teilen zu verhindern. Die zweite Stromquelle P2 wird dann eingeschaltet und läßt einen Wechselstrom von der zweiten Leitungsschienenvorrichtung 102 zu der dritten Leitungsschienenvorrichtung 103 und durch die Schaltvorrichtung S in die Induktorvorrichtung fließen, wie dies durch die Pfeile in Fig. 9A angedeutet ist.

Die Enderhitzung der Zahnoberflächen erfolgt in der Weise, daß das Werkstück W von dem Motor 99 mit einer kontrollierten Geschwindigkeit an der Induktorspule 12 vorbei fortschreitend abwärtsbewegt wird, um die Zähne fortschreitend auf eine Endtemperatur zu erhitzen, die oberhalb einer Abschreckhärtungstemperatur liegt, wobei ein der Höhe H der nach außen gerichteten zylindrischen Fläche 16 der Spule 12 entsprechendes Temperatur- oder Wärmeband in Axialrichtung am Werkstück entlangwandert. Gleichzeitig wird Abschreckflüssigkeit von der Abschreckflüssigkeitsquelle 53 durch den Spulenträger 10 und von den Abschreckflüssigkeitslöchern 21 nach außen geleitet, wie dies in Fig. 11 angedeutet ist, um die auf die Endtemperatur erhitzten Zahnoberflächen unmittelbar im Anschluß an das sich axial bewegende Endwärmeband einer Abschreckhärtung zu unterwerfen.

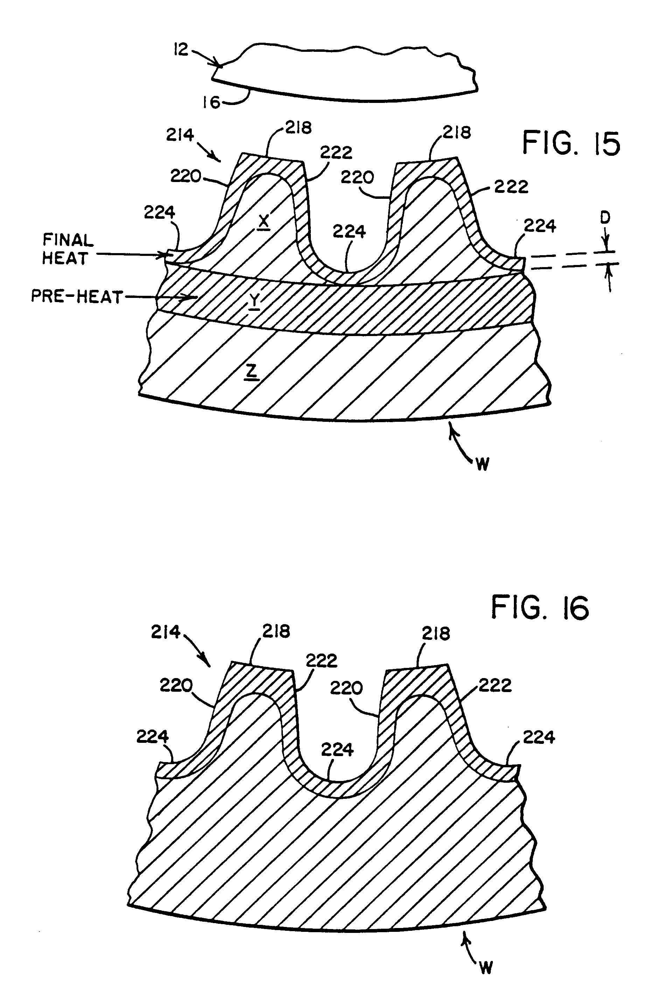

Mehr im einzelnen wird die Enderhitzung auf dem in Fig. 14 dargestellten Wärmeprofil in Gang gesetzt, wo sich das vorgewärmte innere Band unter den Zahndickenbereichen X und längs der Wurzelbereiche Y erstreckt. Die von der zweiten Stromquelle P2 zur Verfügung gestellte, relativ hohe Frequenz des Wechselstromes läßt die Wärme nur bis zu der verhältnismäßig geringen, in Fig. 15 gezeigten Tiefe D eindringen. Bemerkenswerterweise ermöglicht es das vorgewärmte innere Band, daß die Endwärme von hoher Frequenz bis zu der Tiefe D sowohl an den die Zähne verbindenden Wurzelflächen 224 eindringt, die radial am weitesten von der Induktorspulenfläche 16 entfernt sind, als auch die Tragflächen oder Flanken 220 und 222 und die Spitzenflächen 218 beaufschlagt, weil das innere, erwärmte Band in den verbindenden Wurzelbereichen Wärmeenergie zur Verfügung stellt, die dazu dient, den elektrischen Durchgangswiderstand in diesen Bereichen herabzusetzen, und infolgedessen den induzierten Strom befähigt, ebenso zwischen benachbarten Zahnoberflächen wie quer über diese Flächen. Das vorgewärmte innere Band verhindert auch eine schnelle Einleitung der Endwärme in die Zahndickenbereiche X und in den darunterliegenden Bereich Z. Die innere zylindrische Fläche 214 des Werkstücks W wird hierdurch gleichmäßig bis zu der in Fig. 15 gezeigten Tiefe D auf eine Endtemperatur erwärmt. Das Abschreckhärten, welches der Enderwärmung unmittelbar folgt, schafft dann das gleichförmige Härtebild, das in Fig. 16 dargestellt ist.

Ein statischer Abschreckprozeß kann auf die Enderwärmung und das Abschreckhärten folgen, um das gesamte Werkstück abzukühlen und eine übermäßige Wärmeleitung zu dem geschlossenen Ende 212 zu verhindern und um das endgültige Härtebild zu stabilisieren. Wenn das Werkstück die in Fig. 5 dargestellte Endstellung erreicht, läßt der Mikroprozessor 208 einen Strom Abschreckflüssigkeit aus dem Behälter 53 durch den Spulenträger 10 und aus den Öffnungen 62 für die statische Abschreckflüssigkeit ausfließen, um das Werkstück zu überfluten und abzukühlen.

Ein wichtiges Merkmal der Erfindung besteht darin, daß das abtastende Vorwärmen und Enderhitzen mit verschiedenen Geschwindigkeiten in Axialrichtung ausgeführt werden kann, um es verschiedenen Werkstückgeometrien anzupassen, die mehr oder weniger Zeit erfordern, um die gewünschten Vorwärm- und Enderhitzungstemperaturprofile zu erreichen. Ferner können Änderungen in der Sequenz und bei der Durchführung der Verfahrensschritte beim Ausüben des Verfahrens und beim Betreiben der Vorrichtung vorgenommen werden, ohne den Rahmen der Erfindung zu verlassen. Beispielsweise kann der Vorwärmprozeß zwei Vorbeiläufe des Werkstücks an der Induktorspule umfassen, wobei zwischen den Durchläufen auch eine kurze Pause vorgesehen werden kann, um die unter Bezugnahme auf Fig. 14 beschriebene Wärmeableitung von den Zahnradzähnen zu ermöglichen. Das Vorbeilaufen an der Induktorspule kann dadurch variiert werden, daß das Werkstück zum Vorwärmen aufwärtsbewegt und dann zum Enderhitzen abwärtsbewegt wird, um einen dazwischenliegenden Schaltschritt zu vermeiden oder um irgendeiner Reihenfolge von Abtast- und/oder Schaltbewegungen zu folgen, die berechnet wurden, um die Vorwärm- und Enderwärmungsprozesse an eine spezielle Werkstückgeometrie anzupassen.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise kann das erfindungsgemäße Verfahren auch bei anderen Werkstücken mit welliger Oberfläche angewendet werden, beispielsweise bei stirnverzahnten Rädern, Kettenrädern, Klinkenrädern, Kurvenscheiben od.dgl., die eine im weitesten Sinne wellige Umfangsfläche haben. Der Rahmen der Erfindung wird hierdurch nicht überschritten.

## Patentansprüche

1. Verfahren zum Härten der gewellten Oberfläche eines Werkstückes, das in Richtung einer sich quer zur Wellung erstreckenden Achse eine gewisse Breite hat und dessen gewellte Fläche Spitzen oder Scheitel und verbindende Wurzeln oder Täler aufweist, wobei die Oberfläche durch Induktion längs eines ersten, in Richtung der Achse wandernden Bandes fortschreitend zunächst soweit vorgewärmt wird, daß die Wurzeln auf eine Temperatur erwärmt werden, die unterhalb der Abschreckhärtungstemperatur liegt; wobei anschließend die vorerwärmte Oberfläche durch Induktion längs eines zweiten, in Axialrichtung wandernden Bandes fortschreitend soweit enderwärmt wird, daß die vorgewärmte Oberfläche Abschreckhärtungstemparatur erreicht und wonach die enderwärmte Oberfläche unmittelbar nach ihrer Enderwärmung fortschreitend abgeschreckt wird, **dadurch gekennzeichnet,** daß die induktive Vorwärmung und die induktive Enderwärmung durch axiale Relativbewegung zwischen dem Werkstück und nur einem Induktor durchgeführt wird, der zum Vorwärmen mit einem Wechselstrom geringer Frequenz < 50 KHz und zum Enderwärmen mit einem Wechselstrom hoher Frequenz > 100 KHz beaufschlagt wird.

2. Verfahren nach Anspruch 1, **dadurch gekennzeichnet,** daß das Abschreckhärten längs eines dritten, axial wandernden Bandes durchgeführt wird, welches dem zweiten, in Axialrichtung wandernden Band unmittelbar folgt.

3. Verfahren nach Anspruch 1 oder 2, **dadurch gekennzeichnet,** daß bei der fortschreitenden Vorerwärmung das Werkstück und die Induktorspule mit einer ersten, vorherbestimmten Geschwindigkeit aneinander vorbeibewegt werden und daß bei der fortschreitenden Enderwärmung das Werkstück und die Induktorspule mit einer zweiten, vorherbestimmten Geschwindigkeit aneinander vorbeibewegt werden, die sich von der ersten, vorherbestimmten Geschwindigkeit unterscheidet.

4. Verfahren nach einem der Ansprüche 1-3, **dadurch gekennzeichnet,** daß das Werkstück zur Vorerwärmung in einer ersten Axialrichtung von einer Ausgangsstellung in eine Endstellung am Induktor vorbeigeführt wird und daß die Enderwärmung dadurch durchgeführt wird, daß das Werkstück aus seiner Endstellung in der entgegengesetzten Axialrichtung am Induktor vorbeigeführt wird.

5. Verfahren nach einem der Ansprüche 1-4, **dadurch gekennzeichnet,** daß zur Bearbeitung hohlzylindrischer Werkstücke mit einem offenen Ende und einer radial nach innen gerichteten Verzahnung ein Induktor mit nach außen gerichteter, zylindrischer Induktorfläche radial innen durch das offene Ende des Werkstückes an dessen Verzahnung vorbeigeführt wird.

6. Verfahren nach einem der Ansprüche 1-5, **dadurch gekennzeichnet,** daß das Werkstück beim Vorwärmen und beim Enderwärmen gedreht wird.

7. Verfahren nach einem der Ansprüche 1-4, **dadurch gekennzeichnet,** daß zum Bearbeiten eines im wesentlichen zylindrischen Werkstückes, dessen gewellte Oberfläche mit den Spitzen oder Scheiteln der Wellen einen radial äußersten Kreis bildet, ein Induktor für induktive Erwärmung mit einer ringförmigen Oberfläche verwendet wird, dessen ringförmige Oberfläche im wesentlichen der radial äußersten Oberfläche des Werkstückes angepaßt ist und der mit einem ersten Wechselstrom beaufschlagt wird, der eine Frequenz von weniger als etwa 50 KHz hat, wenn das Werkstück mit seinem radial äußersten Umfangskreis an der Ringfläche des Induktors axial vorbeibewegt wird, um das Werkstück in einem neben den Wellenflächen liegenden Teil fortschreitend auf eine Temperatur unterhalb der Abschreckhärtungstemperatur vorzuwärmen, und daß der Induktor dann mit einem zweiten Wechselstrom beaufschlagt wird, dessen Frequenz größer als etwa 100 KHz ist, wenn das zylindrische Werkstück mit seinem radial äußersten Umfangskreis an der ringförmigen Induktorfläche axial vorbeibewegt wird, um das vorerwärmte Werkstück nur im Bereich der welligen Flächen auf eine Abschreckhärtungstemparatur endgültig zu erhitzen und daß unmittelbar anschließend an die Enderwärmung das fortschreitende Abschreckhärten der Wellenflächen erfolgt.

8. Verfahren nach einem der Ansprüche 1-3 und 5-7, **dadurch gekennzeichnet,** daß das Werkstück beim Vorwärmen von einer Ausgangsstellung in einer ersten Axialrichtung in eine Endstellung bewegt wird und daß das Werkstück zum Enderhitzen in der gleichen axialen Richtung von der Ausgangsstellung in eine Endstellung bewegt wird, nachdem das Werkstück unmittelbar nach dem Vorwärmen aus seiner Endstellung in seine Ausgangsstellung zurückbewegt worden ist.

9. Verfahren nach einem der Ansprüche 1-8, **dadurch** **gekennzeichnet,** daß im Anschluß an das fortschreitende Abschreckhärten das Werkstück überflutet und insgesamt einer Abschreckung unterworfen wird.

10. Vorrichtung zum induktiven Härten der gewellten Oberfläche eines Werkstückes (W), insbesondere der Verzahnung eines Zahn- oder Kettenrades, das in Axialrichtung eine gewisse Breite hat und eine Mittel-Achse (A) aufweist und dessen radial vorspringende Zähne (214) Zahnoberflächen (218) und die Zähne (214) verbindende Zahnwurzeln (224) aufweisen, wobei vorgesehen sind:
a) nur eine einzige Induktions-Heizvorrichtung (12), die sich im Abstand von der Zahnoberfläche (218) befindet und die koaxial zu dieser ausgerichtet ist, um die Zahnoberfläche zu erwärmen;
b) eine erste Stromquelle (P1), um die Induktions-Heizvorrichtung (12) zur Vorwärmung mit einem ersten Wechselstrom zu versorgen, der eine Frequenz von weniger als etwa 50 KHz hat;
c) eine zweite Stromquelle (P2), welche die Induktions-Heizvorrichtung (12) zur Enderwärmung mit einem zweiten Wechselstrom versorgt, dessen Frequenz höher ist als etwa 100 KHz;
d) Vorschubmittel (99), mit denen die Zahnfläche (218,220, 222,224) an der Induktions-Heizvorrichtung (12) vorbeigeführt werden kann, um die Zahnoberfläche fortschreitend vorzuwärmen und dann die vorgewärmte Zahnoberfläche endgültig zu erwärmen und
e) Vorrichtungen (21) zum sofortigen Abschrecken der enderwärmten Zahnoberfläche (218,220,222), wodurch die Zahnoberfläche (218,220,222) gehärtet wird.

11. Vorrichtung nach Anspruch 10, **dadurch gekennzeichnet,** daß die Induktions-Heizvorrichtung nur eine Induktionsspule (12) aufweist, deren Induktionsfläche (16) sich in geringem Abstand von der Zahnoberfläche (218) befindet und koaxial zu dieser ausgerichtet ist, und daß eine Schaltvorrichtung (S) vorgesehen ist, welche die erste Stromquelle (P1) und die zweite Stromquelle (P2) abwechselnd einschaltet, während die Zahnoberfläche (218) in Axialrichtung gegenüber der Induktionsfläche (16) hin- und herbewegt wird.

12. Vorrichtung nach Anspruch 10 oder 11, **gekennzeichnet durch** Steuervorrichtungen (208, 210), welche die Schaltvorrichtung (S) mit der Vorschubvorrichtung (99) koordinieren, um die Induktorspule (12) entweder mit der ersten Stromquelle (P1) oder der zweiten Stromquelle (P2) zu verbinden, während Axialbewegungen zwischen Induktorspule (12) und Werkstück (W) ausgeführt werden.

13. Vorrichtung nach einem der Ansprüche 11 oder 12, **dadurch gekennzeichnet,** daß die Schaltvorrichtung (S) Mittel zum Ein- und Ausschalten der ersten Stromquelle (P1) und der zweiten Stromquelle (P2) aufweist, um eine Energiezufuhr zu der Induktorspule zu verhindern, während einzelne der Axialbewegungen zwischen Induktorspule (12) und Werkstück (W) ausgeführt werden.

14. Vorrichtung nach einem der Ansprüche 10 bis 13, **dadurch gekennzeichnet,** daß die Vorschubvorrichtung (99) aufeinanderfolgende Axialbewegungen mit verschiedenen Geschwindigkeiten ausführen kann.

15. Vorrichtung nach einem der Ansprüche 10 bis 14, **dadurch gekennzeichnet,** daß die Vorschubvorrichtung (99) aufeinanderfolgende Axialbewegungen in axial entgegengesetzten Richtungen ausführen kann.

16. Vorrichtung nach einem der Ansprüche 10 bis 17, **dadurch gekennzeichnet,** daß die Vorschubvorrichtung (99) zwischen aufeinanderfolgenden Axialbewegungen eine Pause einlegen kann.

17. Vorrichtung nach einem der Ansprüche 10 bis 16, **dadurch gekennzeichnet,** daß die Induktionsfläche (16) der Induktorspule (12) radial nach außen gerichtet ist.

18. Vorrichtung nach einem der Ansprüche 10 bis 16, **dadurch gekennzeichnet,** daß die Induktions-Heizvorrichtung (12) eine radial nach innen gerichtete Induktionsheizfläche aufweist.

## Claims

1. A process for hardening the corrugated surface of a workpiece which has a certain width in the direction of an axis extending transversely to the corrugation, and the corrugated surface of which has peaks or vertexes and connecting roots or valleys, wherein the surface is first progressively preheated by induction along a first band travelling in the direction of the axis to such an extent that the roots are heated to a temperature which is below the quench hardening temperature; wherein the preheated surface is subsequently progressively finally heated by induction along a second band travelling in the axial direction to such an extent that the preheated surface reaches the quench hardening temperature, and after which the finally heated surface is progressively quenched immediately after its final heating, characterised in that the inductive preheating and the inductive final heating are carried out by axial relative movement between the workpiece and only one inductor, which is acted upon by an AC current of low frequency < 50 kHz for the preheating and by an AC current of high frequency > 100 kHz for the final heating.

2. A process according to claim 1, characterised in that the quench hardening is carried out along a third, axially travelling band, which immediately follows the second band travelling in the axial direction.

3. A process according to claim 1 or 2, characterised in that during the progressive preheating the workpiece and the induction coil are moved past each other at a first predetermined speed and that during the progressive final heating the workpiece and the induction coil are moved past each other at a second predetermined speed which differs from the first predetermined speed.

4. A process according to any one of claims 1 - 3, characterised in that for preheating in a first axial direction the workpiece is guided past the inductor from a starting position to an end position, and that the final heating is carried out by guiding the workpiece past the inductor from its end position in the opposite axial direction.

5. A process according to any one of claims 1 - 4, characterised in that for processing hollow cylindrical workpieces with an open end and with gearing oriented radially inwards an inductor with a cylindrical inductor face oriented radially outwards is guided radially inwards through the open end of the workpiece past the gearing of the latter.

6. A process according to any one of claims 1 - 5, characterised in that the workpiece is rotated during the preheating and during the final heating.

7. A process according to any one of claims 1 - 4, characterised in that for processing a substantially cylindrical workpiece, the corrugated surface of which forms a radially outermost circle with the peaks or vertexes of the corrugations, an inductor with an annular surface is used for inductive heating, the annular surface of which is substantially matched to the radially outermost surface of the workpiece, and which is acted upon by a first AC current which has a frequency less than about 50 kHz when the radially outermost peripheral circle of the workpiece is moved axially past the annular face of the inductor in order to preheat a part of the workpiece situated near the corrugation faces progressively to a temperature below the quench hardening temperature, and that the inductor is then acted upon by a second AC current, the frequency of which is greater than about 100 kHz, when the radially outermost peripheral circle of the workpiece is moved axially past the annular inductor face in order finally to heat the preheated workpiece to a quench hardening temperature only in the region of its corrugated faces, and that the progressive quench hardening of the corrugated faces occurs immediately following the final heating.

8. A process according to any one of claims 1 - 3 and 5 - 7, characterised in that during the preheating the workpiece is moved in a first axial direction from a starting position into an end position, and that the workpiece is moved in the same axial direction from the starting position into an end position for the final heating after the workpiece has been moved back from its end position into its starting position immediately after the preheating.

9. A process according to any one of claims 1 - 8, characterised in that following the progressive quench hardening the workpiece is flooded and subjected to an overall quenching.

10. An apparatus for the inductive hardening of the corrugated surface of a workpiece (W), particularly the gearing of a gear wheel or chain wheel, which has a certain width in the axial direction and a centre line (A), and the radially projecting teeth (214) of which have tooth surfaces (218) and tooth roots (224), connecting the teeth (214), wherein the following are provided:
a) only a single induction heating apparatus (12), which is situated at a distance from the tooth surface (218) and is aligned coaxially with the latter in order to heat the tooth surface;
b) a first source of current (P1), in order to supply the induction heating apparatus (12) with a first AC current, which has a frequency of less than about 50 kHz, for preheating;
c) a second source of current (P2), which supplies the induction heating apparatus (12) with a second AC current, the frequency of which is greater than about 100 kHz, for the final heating;
d) forward feed means (99) by means of which the tooth surface (218, 220, 222, 224) can be guided past the induction heating apparatus (12) in order progressively to preheat the tooth surface and then finally to heat the preheated tooth surface; and
e) apparatuses (21) for the immediate quenching of the finally heated tooth surface (218, 220, 222), by means of which the tooth surface (218, 220, 222) is hardened.

11. An apparatus according to claim 10, characterised in that the induction heating apparatus only has one induction coil (12), the induction face (16) of which is situated at a short distance from the tooth surface (218) and is aligned coaxially with the latter, and that a switching apparatus (S) is provided which alternately switches on the first source of current (P1) and the second source of current (P2) whilst the tooth surface (218) is moved to and fro in the axial direction in relation to the induction face (16).

12. An apparatus according to claim 10 or 11, characterised by controllers (208, 210) which coordinate the switching apparatus (S) with the forward feed apparatus (99) in order to connect the induction coil (12) either to the first source of current (P1) or to the second source of current (P2) whilst axial movements are being executed between the induction coil (12) and the workpiece (W).

13. An apparatus according to either one of claims 11 or 12, characterised in that the switching apparatus (S) comprises means for switching on and switching off the first source of current (P1) and the second source of current (P2) in order to prevent energy from being supplied to the induction coil whilst some of the axial movements are being executed between the induction coil (12) and the workpiece (W).

14. An apparatus according to any one of claims 10 to 13, characterised in that the forward feed apparatus (99) can execute successive axial movements at different speeds.

15. An apparatus according to any one of claims 10 to 14, characterised in that the forward feed apparatus (99) can execute successive axial movements in opposite axial directions.

16. An apparatus according to any one of claims 10 to 17, characterised in that the forward feed apparatus (99) can insert a pause between successive axial movements.

17. An apparatus according to any one of claims 10 to 16, characterised in that the induction face (16) of the induction coil (12) is oriented radially outwards.

18. An apparatus according to any one of claims 10 to 16, characterised in that the induction heating apparatus (12) has an induction heating face oriented radially inwards.

## Revendications

1. Procédé de durcissement de la surface ondulée d'une pièce, qui présente une certaine largeur en direction d'un axe s'étendant perpendiculairement à l'ondulation et dont la surface ondulée présente des pointes ou sommets et des racines ou creux de liaison, la surface étant d'abord progressivement préchauffée par induction le long d'une première bande mobile en direction axiale, jusqu'à ce que les racines soient chauffées à une température inférieure à la température de durcissement par trempe, la surface préchauffée subissant ensuite progressivement un chauffage final par induction le long d'une deuxième bande mobile en direction axiale; jusqu'à ce que la surface préchauffée atteigne la température de durcissement par trempe, après quoi la surface qui a subi un chauffage final est trempée progressivement, directement après son chauffage final, caractérisé en ce que le préchauffage par induction et le chauffage final par induction sont effectués par un mouvement relatif axial entre la pièce et un seul inducteur qui est alimenté par un courant alternatif de faible fréquence < 50 KHz pour le préchauffage et à un courant alternatif de fréquence élevée > 100 KHz pour le chauffage.

2. Procédé selon la revendication 1, caractérisé en ce que le durcissement par trempe se déroule le long d'une troisième bande mobile axialement, qui suit directement la deuxième bande mobile en direction axiale.

3. Procédé selon la revendication 1 ou 2, caractérisé en ce que la pièce et la bobine d'induction sont déplacées l'une contre l'autre à une première vitesse prédéterminée lors du préchauffage progressif et en ce que la pièce et la bobine d'induction sont déplacées l'une contre l'autre à une deuxième vitesse prédéterminée différente de la première vitesse prédéterminée lors du chauffage final progressif.

4. Procédé selon l'une quelconque des revendications 1 à 3, caractérisé en ce que la pièce longe l'inducteur pour le préchauffage dans une première direction axiale d'une position initiale vers une position finale et en ce que le chauffage final est effectué en amenant la pièce à passer le long de l'inducteur d'une position finale dans une direction axiale opposée.

5. Procédé selon l'une quelconque des revendications 1 à 4, caractérisé en ce que, pour le travail de pièces cylindriques creuses présentant une extrémité ouverte et une denture dirigée radialement vers l'intérieur, un inducteur avec une face d'inducteur cylindrique dirigée vers l'extérieur, longe la denture de la pièce radialement à l'intérieur par son extrémité ouverte.

6. Procédé selon l'une quelconque des revendications 1 à 5, caractérisé en ce que la pièce tourne lors du préchauffage et du chauffage final.

7. Procédé selon l'une quelconque des revendications 1 à 4, caractérisé en ce que, pour le travail d'une pièce essentiellement cylindrique, dont la surface ondulée forme un cercle situé radialement à l'extrémité externe avec les pointes ou sommets de l'ondulation, est utilisé un inducteur pour le chauffage par induction avec une surface annulaire, dont la surface annulaire est adaptée essentiellement à la surface située radialement à l'extérieur externe et qui est alimenté par un premier courant alternatif d'une fréquence inférieure à 50 KHz approximativement, lorsque la pièce avec son anneau périphérique situé radialement à l'extérieur externe longe axialement la surface annulaire de l'inducteur, pour préchauffer progressivement la pièce dans un élément situé à côté des faces ondulées, à une température inférieure à la température de durcissement par trempe et en ce que l'inducteur est alors alimenté par un deuxième courant alternatif, dont la fréquence est supérieure à 100 KHz approximativement, lorsque la pièce cylindrique avec son anneau périphérique situé radialement à l'extérieur externe, longe axialement la face d'inducteur annulaire pour chauffer définitivement la pièce préchauffée, uniquement dans la région des faces ondulées, à une température de durcissement par trempe et en ce que le durcissement par trempe progressif des faces ondulées, succède directement au chauffage final.

8. Procédé selon l'une quelconque des revendications 1 à 3 et 5 à 7, caractérisé en ce que la pièce est déplacée lors du préchauffage d'une position initiale dans une première direction axiale et en ce que, pour le chauffage final, la pièce est déplacée dans la même direction axiale d'une position initiale dans une position finale, à la suite de quoi la pièce est ramenée de sa position finale dans sa position initiale directement après le préchauffage.

9. Procédé selon l'une quelconque des revendications 1 à 8, caractérisé en ce que la pièce est immergée et soumise globalement à une trempe à la suite du durcissement par trempe progressif.

10. Dispositif de durcissement inductif de la surface ondulée d'une pièce (W), en particulier la denture d'une roue dentée ou à chaînes, qui présente une certaine largeur axiale et un axe médian (A) et dont les dents saillantes radialement (214) présentent des surfaces dentées (218) et des racines (224) reliant les dents (214), qui prévoit :
a) un seul dispositif de chauffage par induction (12) espacé de la surface dentée (218) et dirigé coaxialement à celle-ci, pour chauffer la surface dentée;
b) une première source de courant (P1) qui alimente le dispositif de chauffage par induction (12) pour le préchauffage avec un premier courant alternatif d'une fréquence inférieure à 50 KHz approximativement;
c) une deuxième source de courant (P2) qui alimente le dispositif de chauffage par induction (12) pour le chauffage final avec un deuxième courant alternatif, dont la fréquence est supérieure à 100 KHz approximativement;
d) des moyens d'avance (99) par lesquels la surface dentée (218, 220, 222, 224) est amenée le long du dispositif de chauffage par induction (12) pour préchauffer progressivement la surface dentée et pour chauffer ensuite définitivement la surface dentée préchauffée et
e) des dispositifs (21) pour la trempe immédiate de la surface dentée (218, 220, 222) après un chauffage final, ce qui durcit la surface dentée (218, 220, 222).

11. Dispositif selon la revendication 10, caractérisé en ce que le dispositif de chauffage par induction ne présente qu'une seule bobine d'induction (12), dont la surface d'induction (16) est légèrement écartée de la surface dentée (218) et est dirigée coaxialement à celle-ci et en ce qu'est prévu un dispositif de commutation (S) qui raccorde alternativement les première (P1) et deuxième (P2) sources de courant, tandis que la surface dentée (218) est déplacée dans un mouvement de va-et-vient en direction axiale par rapport à la face d'induction (16).

12. Dispositif selon la revendication 10 ou 11, caractérisé en ce que les dispositifs de commande (208, 210) coordonnent le dispositif de commutation (S) avec le dispositif d'avance (99), pour raccorder la bobine d'induction (12), soit à la première source de courant (P1), soit à la deuxième source de courant (P2), tandis que sont effectués des mouvements axiaux entre la bobine d'induction (12) et la pièce (W).

13. Dispositif selon l'une quelconque des revendications 11 ou 12, caractérisé en ce que le dispositif de commutation (S) présente un moyen pour activer et désactiver les première (P1) et deuxième (P2) sources de courant, pour empêcher un apport énergétique à la bobine d'induction, tandis que certains des mouvements axiaux sont effectués entre la bobine d'induction (12) et la pièce (W).

14. Dispositif selon l'une quelconque des revendications 10 à 13, caractérisé en ce que le dispositif d'avance (99) peut effectuer des mouvements axiaux successifs à différentes vitesses.

15. Dispositif selon l'une quelconque des revendications 10 à 14, caractérisé en ce que le dispositif d'avance (99) peut effectuer des mouvements axiaux successifs dans des directions opposées axialement.

16. Dispositif selon l'une quelconque des revendications 10 à 17, caractérisé en ce que le dispositif d'avance (99) peut inclure une pause entre des mouvements axiaux successifs.

17. Dispositif selon l'une quelconque des revendications 10 à 16, caractérisé en ce que la face d'induction (16) de la bobine d'induction (12) est tournée radialement vers l'extérieur.

18. Dispositif selon l'une quelconque des revendications 10 à 16, caractérisé en ce que le dispositif de chauffage par induction (12) présente une face de chauffage par induction tournée radialement vers l'intérieur.
